# EUROPEAN PATENT SPECIFICATION

(11) **EP 2 299 751 B1**
(45) Date of publication and mention of the grant of the patent: **24.08.2016**
(21) Application number: 09770074.4
(22) Date of filing: 18.06.2009
(51) Int. Cl.: H04L 1/00, H04W 72/08, H04B 17/24, H04B 17/309, H04B 7/04, H04L 5/00, H04L 25/03, H04B 7/06, H04W 72/04

(54) **MOBILE STATION APPARATUS, COMMUNICATION SYSTEM, AND COMMUNICATION METHOD**
MOBILSTATIONSAPPARAT, KOMMUNIKATIONSSYSTEM UND KOMMUNIKATIONSVERFAHREN
APPAREIL DE STATION MOBILE, SYSTÈME DE COMMUNICATION ET PROCÉDÉ DE COMMUNICATION

(30) Priority: 23.06.2008 JP 2008163607
(43) Date of publication of application: 23.03.2011
(73) Proprietor: Sharp Kabushiki Kaisha, Osaka-shi, Osaka 545-8522 (JP)
(72) Inventor: AKIMOTO, Yosuke, Osaka-shi, Osaka 545-8522 (JP); SATO, Seiji, Osaka-shi, Osaka 545-8522 (JP); YAMADA, Shohei, Osaka-shi, Osaka 545-8522 (JP); AIBA, Tatsushi, Osaka-shi, Osaka 545-8522 (JP)
(74) Representative: Müller Hoffmann & Partner
(86) International application number: PCT/JP2009/061107
(87) International publication number: WO 2009/157364

(56) References cited:
- EP-A1- 1 916 859
- EP-A1- 2 369 887
- WO-A1-2007/013457
- WO-A1-2010/015429
- "3rd Generation Partnership Project; Technical Specification Group Radio Access Network; Evolved Universal Terrestrial Radio Access (E-UTRA); Physical layer procedures (Release 8)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.3.0, 1 May 2008 (2008-05-01), pages 1-47, XP050377558,
- "On the implementation of rank override using codeword DTX", 3GPP DRAFT; R1-074200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20071002, 2 October 2007 (2007-10-02), XP050107729, [retrieved on 2007-10-02]
- LG ELECTRONICS: "Downlink Control Signaling for SU-MIMO", 3GPP DRAFT; R1-081000, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20080205, 5 February 2008 (2008-02-05), XP050109468, [retrieved on 2008-02-05]
- PHILIPS: "CQI reporting when MIMO and CPC are both configured", 3GPP DRAFT; R1-072388 DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Kobe, Japan; 20070502, 2 May 2007 (2007-05-02), XP050106116, [retrieved on 2007-05-02]
- ICERA SEMICONDUCTOR: "Dropping of RI/PMI Report on PUCCH", 3GPP DRAFT; R1-083201, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), XP050316630, [retrieved on 2008-08-12]
- SHARP: "Impact of the PMI/RI Report Drop on the PUCCH CQI Report", 3GPP DRAFT; R1-082273(PMI_RI_REPORT_DROP), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080624, 24 June 2008 (2008-06-24), XP050110580, [retrieved on 2008-06-24]
- 'Physical layer procedures(Release 8), 3GPP TS 36.213 V8.2.0', March 2008 article 'Evolved Universal Terrestrial Radio Access (E-UTRA)', pages 7.2 - 7.2.2, XP002519043
- '3GPP TSG RAN WG1 Meeting #53bis Rl-082273', 30 June 2008 article 'Impact of the PMI/RI Report Drop on the PUCCH CQI Report', XP050110580

## Description

### Technical Field

The present invention relates to techniques that a base station apparatus and mobile station apparatus perform wireless communications.

### Background Art

The 3GPP (3rd Generation Partnership Project) is a project that considers and prepares specifications of cellular telephone systems based on evolved networks of W-CDMA (Wideband-Code Division Multiple Access) and GSM (Global System for Mobile Communications). The 3GPP has standardized the W-CDMA system as a 3G cellular mobile communication system, and the service has started sequentially. Further, HSDPA (High-Speed Downlink Packet Access) with the communication rate further increased has also been standardized, and the service has started. The 3GPP considers evolution of 3G radio access techniques (Evolved Universal Terrestrial Radio Access (hereinafter, abbreviated as "E-UTRA"))

As an uplink communication scheme in E-UTRA, SC-FDMA (Single carrier-Frequency Division Multiple Access) systems are under review. In OFDMA (Orthogonal Frequency Division Multiple Access) systems, since modulation by multicarrier is performed, PAPR (Peak to Average Power Ratio) characteristics are poor. In contrast thereto, the SC-FDMA system is of single carrier communications, therefore is excellent in PAPR characteristics, while enabling frequency scheduling, and is effective in E-UTRA in which decreases in cost are required in mobile station apparatuses. To prevent deterioration of PAPR characteristics, E-UTRA is provided with constrains that a plurality of single carrier signals is not transmitted concurrently. As an example, when a plurality of channels (resources) to transmit control information is concurrently allocated, there is a case that only the control information with a high priority is transmitted on a single channel without transmitting the other information.

As a downlink communication scheme in E-UTRA, OFDMA systems have been proposed in which user multiplexing is performed using mutually orthogonal subcarriers. Further, in the OFDMA systems, techniques are applied such as adaptive modulation/demodulation and error correcting coding scheme (AMCS: Adaptive Modulation and Coding System) based on adaptive radio link control such as channel coding.

AMCS is a scheme for adaptively switching radio transmission parameters such as a coding rate of error correcting and data modulation level corresponding to propagation path conditions of each mobile station apparatus. For example, with respect to data modulation, as the propagation path conditions are improved, QPSK (Quadrature Phase Shift Keying) modulation is switched to a multi-level modulation scheme with higher modulation efficiency such as 16QAM (Quadrature Amplitude Modulation) and 64QAM, and it is thereby possible to increase maximum throughput in the mobile communication system.

Further, in OFDMA, it is possible to divide the communicable domain into frequency regions corresponding to subcarriers and time regions. Some of the divided regions are called a resource block, one or more resource blocks are allocated to each mobile station apparatus, and it is possible to perform communications with a plurality of mobile station apparatuses multiplexed.

In order for a base station apparatus and each mobile station apparatus to perform communications with optimal quality and rate in response to demands, it is necessary to determine resource block allocation and transmission scheme in consideration of reception quality in each subcarrier in each mobile station apparatus. In consideration of the fact that the base station apparatus determines a transmission scheme and scheduling, and that only a corresponding mobile station apparatus is capable of knowing conditions of the downlink propagation path in Frequency Division Duplex (FDD), each mobile station apparatus needs to provide feedback of reception quality(corresponding to MCS:Modulation and Coding Scheme (modulation/error correcting coding scheme) which can be received in the mobile station apparatus) to the base station apparatus.

Further, in order to increase the communication path capacity in E-UTRA, it is proposed to use SM (Spatial Multiplexing) techniques using MIMO (Multiple Input Multiple Output) and transmission diversity techniques such as SFBC (Space-Frequency Block Code). When MIMO is used, it is made possible to multiplex a plurality of information to transmit by forming a plurality of propagation paths as space due to the effect of multipath, and to obtain reception gain by combining power of a plurality of transmission antennas on the reception side. Herein, these are collectively called MIMO. In E-UTRA, it is assumed to use SM using MIMO and transmission diversity on the downlink, and which communication scheme is used to perform communications is determined in consideration of propagation path conditions between the base station apparatus and mobile station apparatus.

In using MIMO-SM, a plurality of spatially multiplexed sequences transmitted from respective antennas is demultiplexed in a receiver using the propagation path between each transmission antenna and each reception antenna. Since deterioration in characteristics occurs when demultiplexing is incomplete due to the cause such as noise, it is effective that the base station apparatus beforehand performs precoding on a transmission signal sequence to enable each spatially multiplexed sequence to be demultiplexed with ease. The sequence of optimal transmission signal precoding is dependent on a propagation path between transmission and reception antennas and the frequency, and in FDD, cannot be calculated in the base station apparatus as well as the reception quality information. Therefore, in E-UTRA, it is considered that each mobile station apparatus transmits information indicative of a sequence to perform precoding on a transmission signal to the base station apparatus as feedback in MIMO-SM communications.

A precoding sequence of a transmission signal is represented by a matrix corresponding to the number of transmission signal sequences. In E-UTRA, in order to avoid increases in feedback bits, it is considered that the mobile station apparatus and base station apparatus beforehand share a list table of precoding sequences, and exchange only an index indicative of a value of the table. The information for specifying a transmission signal precoding sequence including this index is called the transmission signal precoding information.

Since characteristics of a downlink signal subjected to the precoding transmitted from the base station apparatus vary with the sequence of the precoding, the information (i. e. reception quality information) of MCS sent to the base station apparatus as feedback is based on the premise that a specific transmission signal precoding sequence is used. More specifically, the reception quality information sent to the base station apparatus as feedback indicates the information that is calculated in association with a transmission signal precoding sequence that is transmitted concurrently or beforehand, or determined by a function or the like defined in specifications, etc.

Further, in MIMO-SM, the information of the number of spatially multiplexed signal sequences is also dependent on the propagation path between the mobile station apparatus and the base station apparatus, and is variable in response to the conditions. In E-UTRA, the mobile station apparatus calculates the number of receivable sequences using a signal transmitted from the base station apparatus, and sends the feedback to the base station apparatus as well as the above-mentioned reception quality information and transmission signal precoding information.

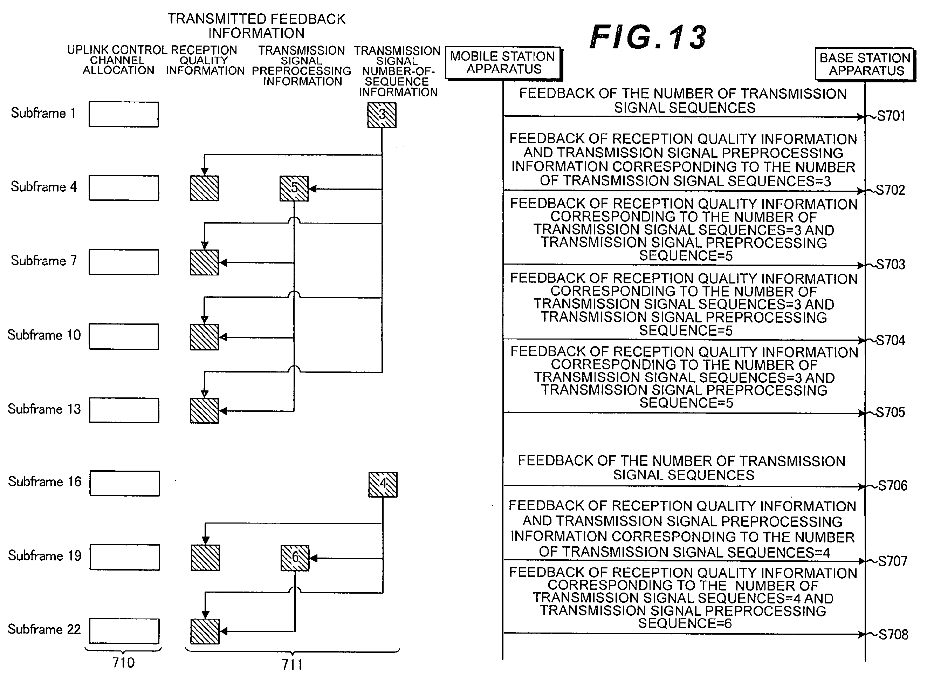

FIG. 13 shows a timing chart and sequence chart illustrating the processing flow between the base station apparatus and the mobile station apparatus in a conventional mobile communication system. An example as shown in FIG. 13 is to implement a mechanism of periodically transmitting the reception quality information, transmission signal precoding information and transmission signal number-of-sequence information as described in Non-patent Document 1, is an example of transmitting each kind of feedback information on periodically allocated uplink control channels (PUCCH: Physical Uplink Control Channel), and describes feedback in subframes 1 to 16.

Herein, to simplify, downlink signals and uplink data signals are omitted, and further, feedback information is also omitted such as Positive Acknowledgement signal ACK/Negative Acknowledgement signal NACK that are transmitted from the mobile station apparatus to the base station apparatus. In this example, resources of the above-mentioned uplink control channel are allocated prior to subframe 1, and resources are allocated every three subframes starting subframe 1. With respect to the reception quality information, transmission signal precoding information and transmission signal number-of-sequence information transmitted using the resources, each transmission timing is as described below, and feedback is made in a format designated by the base station apparatus.

In this example, the base station apparatus notifies the mobile station apparatus of information indicating the number of times once which the transmission signal number-of-sequence information is transmitted among allocated resources, and it is set that the transmission signal number-of-sequence information is transmitted once five times among allocated resources from the subframe 1 as the beginning. In other words, the transmission signal number-of-sequence information is transmitted periodically in subframes 1 and 16, and the numbers of transmission signal sequences are assumed to be "3" and "4", respectively (steps S701 and S706). In resources subsequent to transmission of the transmission signal number-of-sequence information, the reception quality information and transmission signal precoding information is transmitted in subframes 4 and 19 (steps S702 and S707). In other subframes, only the reception quality information is transmitted (steps S703, S704, S705 and S708). Herein, the reception quality information to transmit may correspond to the entire band supported by the system, or may be limited to a specific frequency band. In specifying a frequency band, the position information may be included in the reception quality information and transmitted.

At this point, the reception quality information and the transmission signal precoding information corresponds to the immediately transmitted transmission signal number-of-sequence information. In other words, in subframes 4, 7, 10 and 13, transmitted is the reception quality information and the transmission signal precoding information that corresponds to the number of transmission signal sequences transmitted in the subframe 1 i.e. "3". In subframes 19 and 22, transmitted is the reception quality information and the transmission signal precoding information that corresponds to the number of transmission signal sequences transmitted in the subframe 16 i.e. "4". Herein, "corresponds" means transmitting a plurality of reception quality information respectively corresponding to transmission signal sequences, or using a transmission format determined for each transmission signal sequence in the case of changing MCS for each spatially multiplexed transmission signal sequence (or for each their group).

Further, the reception quality information to transmit conforms to MCS that can be received in using the immediately-before transmitted transmission signal precoding information. In other words, in subframes 4, 7, 10 and 13, transmitted is the reception quality information in consideration of processing a transmission signal using the transmission signal precoding information transmitted in the subframe 4 i.e. a precoding sequence represented by "No. 5". In subframes 19 and 22, transmitted is optimal MCS (i.e. reception quality information) in consideration of performing precoding on a transmission signal using the transmission signal precoding information transmitted in the subframe 19 i.e. a precoding sequence represented by "No. 6".

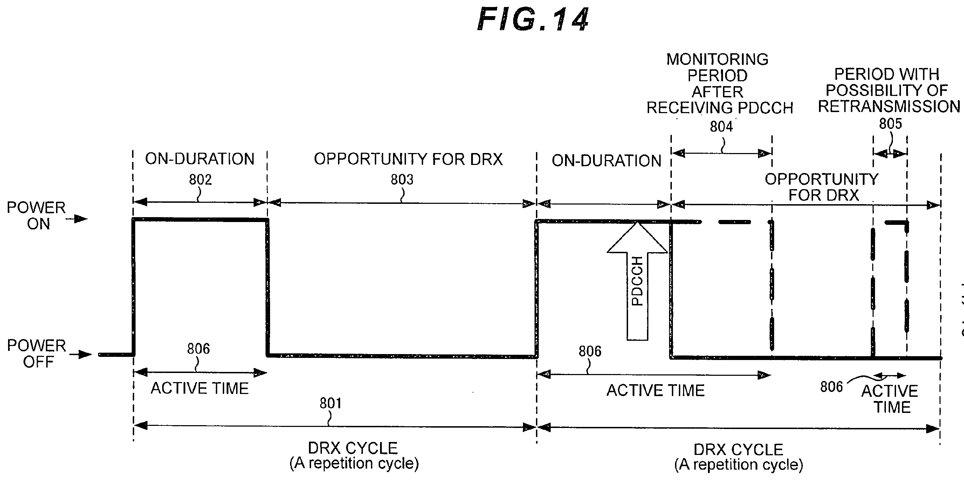

Meanwhile, in E-UTRA, to suppress power consumption in the mobile station apparatus, there is the DRX (Discontinuous Reception) technique that the mobile station apparatus turns power on only for required durations to receive signals. FIG. 14 shows the general outline of DRX control. The mobile station apparatus repeats on-duration 802 and opportunity for DRX 803 in a DRX cycle 801 (repetition cycle). When the on-duration and DRX cycle are designated, the opportunity for DRX is uniquely defined. The on-duration is a period comprised of a single subframe or a plurality of subframes determined to monitor the PDCCH (Physical Downlink Control Channel).

In the on-duration, the base station apparatus transmits the PDCCH to start uplink or downlink resource allocation. The mobile station apparatus, which receives the PDCCH indicating scheduling of uplink or downlink initial transmission data (new data) in the on-duration, monitors the PDCCH for a certain period exceeding the on-duration (804) . Further, in a period having the possibility of retransmission of uplink data or downlink data, the mobile station apparatus monitors the PDCCH irrespective of whether the period is within or out of the range of on-duration (805). These periods, in which the mobile station apparatus starts the reception section to monitor the PDCCH and is active, are called the Active Time (806).

The base station apparatus transmits the data during the Active Time of the mobile station apparatus. The base station apparatus beforehand notifies the mobile station apparatus of the DRX cycle and on-duration, and based on the information, the mobile station apparatus beforehand repeats power-on periodically, while turning the power on corresponding to reception conditions of the PDCCH and data retransmission conditions (see Non-patent Document 2).

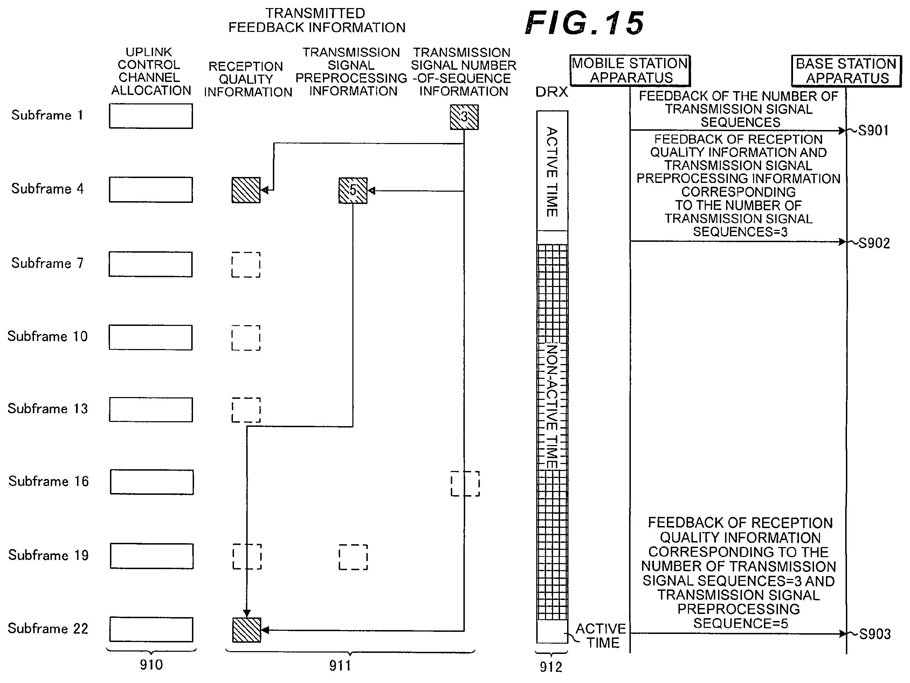

In the case of considering the above-mentioned DRX, described herein is an example of feedback by procedures as described in Non-patent Document 1 that are conventional techniques. FIG. 15 is a timing chart and sequence chart illustrating the processing flow between the base station apparatus and the mobile station apparatus in the conventional mobile communication system. S912 in FIG. 15 shows DRX, and subframes 6 to 21 correspond to a period (herein, called the Non-active Time) except the Active Time. As shown in 910, resources for these types of feedback information are allocated to subframes 1, 4, 7, 10, 13, 16, 19 and 22, as in the example in FIG. 13. Among the resources, by the base station apparatus, it is set to transmit the transmission signal number-of-sequence information once every five times.

In other words, it is set to transmit the transmission signal number-of-sequence information in subframes 1 and 16, the reception quality information and the transmission signal precoding information in subframes 4 and 19, and only the reception quality information in subframes 7, 10, 13 and 22, as feedback. In addition, since the feedback is halted in accordance with the Non-active Time of DRX notified from the base station apparatus, feedback from the mobile station apparatus is made only in subframes 1, 4 and 22, and the number of transmission signal sequences (step S901), the reception quality information and the transmission signal precoding information (step S902), and the reception quality information (step S903) is transmitted in the subframes, respectively, as feedback.

However, the transmission signal precoding information corresponding to the subframe 22 (step S903) is of the subframe 19, but the subframe 19 is in the Non-active Time, and the base station apparatus cannot know information that which transmission signal precoding sequence is used to calculate the reception quality information transmitted in the subframe 22 (step S903). It is described in Non-patent Document 2 that the reception quality information is calculated and transmitted according to the immediately-before transmitted transmission signal precoding information. However, when the opportunity for DRX is large relative to the variation speed in the propagation path, the possibility is high that the transmission signal precoding sequence is changed from the optimal sequence, and there is a fear that throughput characteristics deteriorate as a result.

Further, as in the case that the transmission signal precoding information is not transmitted due DRX, another case occurs where the need of transmitting the other information with a high priority arises at timing at which the transmission signal precoding information is scheduled, and the transmission signal precoding information cannot be transmitted. Also in such a case, the same problem as described above occurs.
Non-patent Document 1: 3GPP TS 36.213 V8.2.0 (2008-03) Technical Specification 3rd Generation Partnership Project; Technical Specification Group Radio Access Network; Evolved Universal Terrestrial Radio Access (E-UTRA) ; Physical layer procedures (Release 8)
Non-patent Document 2: 3GPP TS 36.321 V8.0.0 (2007-12) Technical Specification 3rd Generation Partnership Project; Technical Specification Group Radio Access Network; Evolved Universal Terrestrial Radio Access (E-UTRA) Medium Access Control (MAC) protocol specification (Release 8)
   "3rd Generation Partnership Project; Technical Specification Group Radio Access Network; Evolved Universal Terrestrial Radio Access (E-UTRA); Physical layer procedures (Release 8)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.3.0, 1 May 2008 (2008-05-01), pages 1-47, XP050377558 discloses a UE procedure for reporting channel quality indication, precoding matrix indicator and rank indication.

"On the implementation of rank override using codeword DTX", 3GPP DRAFT; R1-074200, 3RD GENERATION Partnership Project (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20071002, 2 October 2007 (2007-10-02), XP050107729, [retrieved on 2007-10-02] discloses the implementation of rank override within the current codeword-to-layer-combinations which supports a limited rank override by DTXing a codeword.

### Disclosure of Invention

### Problems to be Solved by the Invention

However, in the above-mentioned conventional techniques, for example, when it is not possible to transmit the transmission signal precoding information that the mobile station apparatus periodically transmits due to the reason that the transmission timing of the information is in the opportunity for DRX or the like, the transmission signal precoding information is not transmitted, and there is a problem that the base station apparatus does not know what transmission signal preceding information is used to calculate the reception quality information of immediately after the opportunity for DRX is finished.

In this case, it is considered that the mobile station apparatus transmits the reception quality information according to the transmission signal precoding information that is transmitted immediately before the opportunity for DRX starts. However, for example, when the moving speed of the mobile station apparatus is high, in other words, when changes in the propagation path are quick, conditions of the propagation path change in a state that the transmission signal precoding information cannot be transmitted, and with the change, a suitable sequence of transmission signal precoding also changes. The reception quality information itself thereby loses reliability, and there is a problem that downlink reception characteristics deteriorate. Further, in the case that the transmission signal precoding information is first transmitted, in other words, in the case that the transmission signal precoding information is not transmitted previously even once, when initial transmission is not performed, it is not possible to use previously transmitted transmission signal precoding information al all, and there is a problem that it is not possible to calculate the reception quality information that is based on the premise that the transmission signal precoding information exists. In addition, this is not limited to only the transmission signal precoding information and the reception quality information, and the same problem occurs in the case of generating current feedback information using previously transmitted feedback information.

The present invention was made in view of such circumstances, and it is an object of the invention to provide a mobile station apparatus, communication system and communication method for clarifying the transmission signal precoding information that is used to calculate the reception quality information performed immediately after the case that the transmission signal precoding information cannot be transmitted, and enabling a base station apparatus to perform suitable communication resource allocation.

### Means for Solving the Problem

(1) This object is solved by the subject-matter of the independent claims. Further advantageous embodiments and refinements of the present invention are described in respective sub-claims. In other words, a mobile station apparatus of the invention is a mobile station apparatus for calculating reception quality information to transmit to a base station apparatus, and is characterized by calculating the reception quality information by selecting either one of a scheme of calculating the reception quality information based on transmission signal number-of-sequence information and transmission signal precoding information calculated from a signal transmitted from the base station apparatus, and another scheme of calculating the reception quality information based on beforehand determined transmission signal number-of-sequence information and beforehand determined transmission signal precoding information.
(2) Further, a mobile station apparatus of the invention is a mobile station apparatus for periodically transmitting feedback information including transmission signal number-of-sequence information, transmission signal precoding information, and reception quality information calculated based on the transmission signal number-of-sequence information and the transmission signal precoding information to a base station apparatus using an
   Preferably, the beforehand defined transmission signal precoding information is set by a signal transmitted from the base station apparatus.
(5) Furthermore, the mobile station apparatus of the invention can be configured to transmit, as feedback, information indicating whether or not the reception quality information as feedback is generated based on the beforehand defined transmission signal number-of-sequence information and the beforehand defined transmission signal precoding information.
(6) Still furthermore, the beforehand defined transmission signal number-of-sequence information can be of a minimum value.
(7) Moreover, the beforehand defined transmission signal number-of-sequence information can be of a maximum value.

A second aspect of the invention relates to a communication system in which a base station apparatus and a mobile station apparatus perform wireless communications, comprising a mobile station apparatus according to the first aspect, and a base station apparatus configured to allocate communication resources to the mobile station apparatus based on reception quality information received from the mobile station apparatus.

A third aspect of the invention relates to a communication method in which a mobile station apparatus periodically transmits feedback information including transmission signal number-of-sequence information, transmission signal precoding information, and reception quality information calculated based on the transmission signal number-of-sequence information and the transmission signal precoding information to a base station apparatus using an uplink control channel, and is characterized in that when the transmission signal precoding information is not transmitted, the reception quality information is calculated based on beforehand defined transmission signal precoding information.

Preferably, when the transmission signal number-of-sequence information and the transmission signal precoding information is not transmitted on an uplink control channel allocated for the transmission signal number-of-sequence information, the reception quality information is generated based on beforehand defined transmission signal number-of-sequence information and beforehand defined transmission signal precoding information.

### Advantageous Effect of the Invention

According to the invention, when the mobile station apparatus does not transmit the transmission signal precoding information with communication resources allocated from the base station apparatus to transmit the transmission signal precoding information, the mobile station apparatus calculates the reception quality information transmitted for a period during which the mobile station apparatus does not transmit the transmission signal precoding information and next transmits the transmission signal precoding information, using beforehand defined transmission signal precoding information, and is thereby capable of transmitting the reception quality information based on the beforehand defined transmission signal precoding information to the base station apparatus as feedback. By this means, it is possible to prevent the occurrence of burst error that occurs in the case of transmitting a downlink signal using the transmission signal precoding information and reception quality information that does correspond with each other in the mobile station apparatus.

### Brief Description of Drawings

FIG. 1 is a block diagram showing a configuration example of a base station apparatus according to Embodiments of the invention;
FIG. 2 is a block diagram showing a configuration example of a mobile station apparatus according to Embodiments of the invention;
FIG. 3 is a diagram showing a timing chart to explain the relationship between the time and information for feedback between the base station apparatus and the mobile station apparatus in a mobile communication system according to Example 1;
FIG. 4 is a sequence chart between the base station apparatus and the mobile station apparatus in the mobile communication system according to Example 1;
FIG. 5 is a diagram showing a timing chart to explain the relationship between the time and information for feedback between the base station apparatus and the mobile station apparatus in a mobile communication system according to Example 2;
FIG. 6 is a sequence chart between the base station apparatus and the mobile station apparatus in the mobile communication system according to Example 2;
FIG. 7 is a diagram showing a timing chart to explain the relationship between the time and information for feedback between the base station apparatus and the mobile station apparatus in a mobile communication system according to Example 3;
FIG. 8 is a sequence chart between the base station apparatus and the mobile station apparatus in the mobile communication system according to Example 3;
FIG. 9 is a diagram showing a timing chart to explain the relationship between the time and information for feedback between the base station apparatus and the mobile station apparatus in a mobile communication system according to Example 4;
FIG. 10 is a sequence chart between the base station apparatus and the mobile station apparatus in the mobile communication system according to Example 4;
FIG. 11 is a diagram showing a timing chart to explain the processing flow between the base station apparatus and the mobile station apparatus in a mobile communication system according to Example 5;
FIG. 12 is a sequence chart between the base station apparatus and the mobile station apparatus in the mobile communication system according to Example 5;
FIG. 13 is a timing chart and sequence chart illustrating the processing flow between a base station apparatus and a mobile station apparatus in a conventional mobile communication system;
FIG. 14 is a diagram showing the general outline of DRX control; and
FIG. 15 is another timing chart and another sequence chart illustrating the processing flow between the base station apparatus and the mobile station apparatus in the conventional mobile communication system.

### Description of Symbols

1 Data control section
3 Modulation coding section
4 Transmission signal precoding section
5 Mapping section
7 Inverse Fast Fourier Transform (IFFT) section
11 Radio transmission section
12 Antenna
15 Radio reception section
17 Fast Fourier Transform (FFT) section
21 Inverse Discrete Fourier Transform (IDFT) section
22 Demodulation decoding section
23 Data extracting section
25 Scheduler section
27 Transmission information control section 31 Modulation code control section
33 Frequency selection scheduler section
35 Transmission signal number-of-sequence information control section
36 Transmission signal precoding information control section
41 Data control section
43 Modulation coding section
44 Discrete Fourier Transform (DFT) section
45 Mapping section
47 Inverse Fast Fourier Transform (IFFT) section
51 Radio transmission section
53 Radio reception section
55 FFT section
57 Demodulation decoding section
61 Data extracting section
63 Antenna
65 Feedback information control section
67 Reception quality information generating section
68 Transmission signal precoding information generating section
69 Transmission signal number-of-sequence information generating section
71 Reception quality measuring section

### Best Mode for Carrying Out the Invention

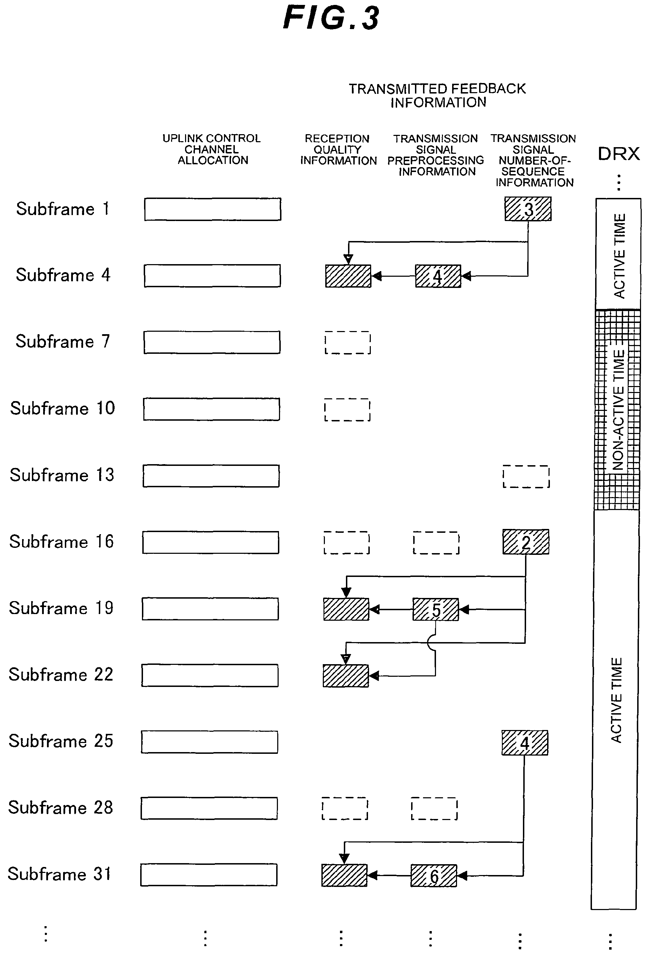

Embodiments of the invention will be described below with reference to drawings. In addition, in the following descriptions, the case that the invention is embodied by a mobile communication system is described, but the invention is not limited thereto, and is established as a mobile communication method. The embodiments 1, 3, 4 and 5 described with reference to Figs. 3, 4 and 7 to 12 describe examples useful for understanding the invention.

### (Embodiment 1)

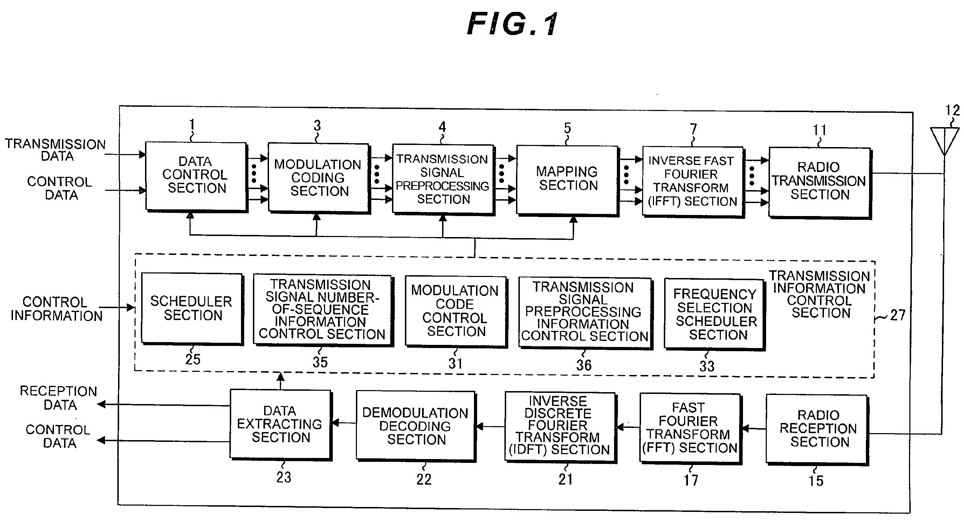

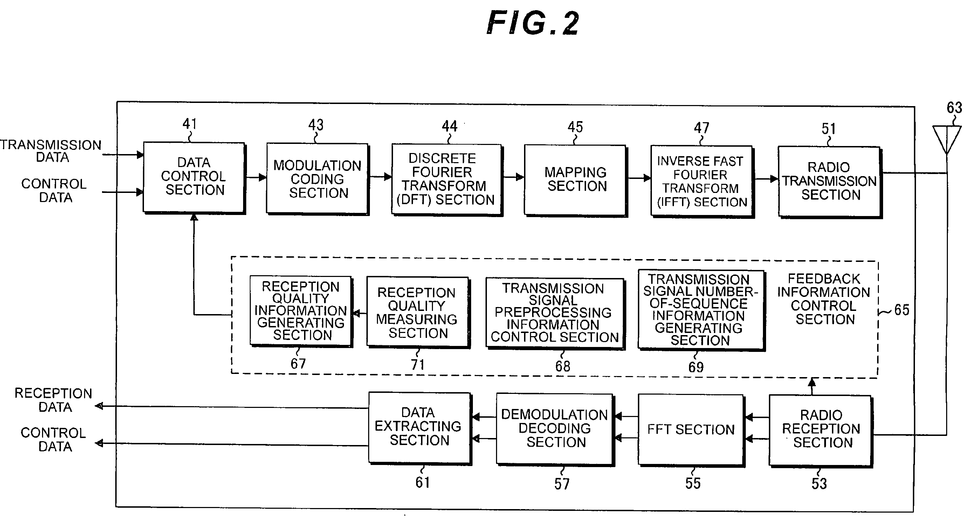

A mobile communication system according to Embodiment 1 of the invention is comprised of a base station apparatus and mobile station apparatuses. FIGs. 1 and 2 are block diagrams showing configuration examples of the base station apparatus and the mobile station apparatus according to this Embodiment, respectively. As shown in FIG. 1, the base station apparatus has a data control section 1, modulation coding section 3, transmission signal precoding section 4, mapping section 5, Inverse Fast Fourier Transform (IFFT) section 7, radio transmission section 11, radio reception section 15, Fast Fourier Transform (FFT) section 17, Inverse Discrete Fourier Transform (IDFT) section 21, demodulation decoding section 22, data extracting section 23, transmission information control section 27, and antenna 12.

The transmission information control section 27 includes a scheduler section 25, modulation code control section 31, frequency selection scheduler section 33, transmission signal number-of-sequence information control section 35, and transmission signal precoding information control section 36. The antenna 12 is provided with the number of antennas required for MIMO-SDM (Space Division Multiplexing) communications.

To the data control section 1 is input transmission data to transmit to each mobile station apparatus and control data, and according to instructions from the transmission information control section 27, the data is sequentially transmitted to mobile station apparatuses. When MIMO-SDM is applied to the output data, the data is divided into a plurality of transmission sequences according to information of the transmission signal number-of-sequence information control section 35.

The modulation coding section 3 provides modulation processing and error correcting coding processing to the signal input from the data control section 1, based on a modulation scheme and coding rate from the transmission information control section 27, and outputs the resultant to the transmission signal precoding section 4. The transmission signal precoding section 4 processes the signal input from the modulation coding section 3 based on the control information input from the transmission information control section 27 to output to the mapping section 5.

Based on frequency selection scheduling information input from the transmission information control section 27, the mapping section 5 maps the data output from the modulation coding section 3 onto each subcarrier to output to the Inverse Fast Fourier Transform section 7. The Inverse Fast Fourier Transform section 7 provides processing of inverse fast Fourier transform to the data output from the mapping section 5 to transform into a time-series baseband digital signal, and outputs the signal to the radio transmission section 11.

The output signal from the Inverse Fast Fourier Transform section 7 is subjected to digital/analog conversion in the radio transmission section 11, and upconverted into a signal with a frequency suitable for transmission, and then, the signal is transmitted to each mobile station apparatus via the antenna 12.

Based on the control information such as a resource region that each mobile station apparatus is capable of using, DRX reception cycle, format of a transmission data channel and buffer status, the scheduler section 25 performs downlink scheduling and uplink scheduling, and performs control of varying the number of transmission signal sequences. The modulation code control section 31 determines a modulation scheme and coding rate to provide to each data, based on reception quality information transmitted from the mobile station apparatus.

The frequency select ion scheduler section 33 performs processing of frequency selection scheduling to provide to each data, based on feedback information transmitted from the mobile station apparatus. The transmission signal number-of-sequence information control section 35 determines the number of sequences of the transmission signal, based on transmission signal number-of-sequence information transmitted from the mobile station apparatus, information of traffic status in the base station apparatus and the like. The transmission signal precoding information control section 36 determines precoding to perform on the transmission data, based on transmission signal precoding information transmitted from the mobile station apparatus.

Using control information input from a higher layer and control information input from the data extracting section 23, the transmission information control section 27 controls the operations of the scheduler section 25, modulation code control section 31, frequency selection scheduler section 33, transmission signal number-of-sequence information control section 35, transmission signal precoding information control section 36 and transmission information control section 27. The section 27 manages the output information of each section, and outputs control information required for the operations of the data control section 1, modulation coding section 3, transmission signal precoding section 4 and mapping section 5.

The radio reception section 15 performs analog/digital conversion on a signal received in the antenna 12, downcoverts the signal into a baseband signal, and then, outputs the signal to the Fast Fourier Transform (FFT) section 17. The Fast Fourier Transform section 17 performs Fourier transform on the received signal for each unit processing time, and outputs the resultant to the Inverse Discrete Fourier Transform section 21. The Inverse Discrete Fourier Transform section 21 divides the input signal into bands allocated for each mobile station apparatus, performs the inverse discrete Fourier transform processing, and outputs a signal such that an SC-FDMA signal is reproduced to the demodulation decoding section 22.

The demodulation decoding section 22 performs demodulation and decoding on the input signal for each mobile station apparatus, and outputs the resultant to the data extracting section 23. The data extracting section 23 divides the input signal from the demodulation decoding section 22 into information required for control information generation in the transmission information control section 27, reception data, and control data required in the higher layer.

Meanwhile, as shown in FIG. 2, the mobile station apparatus has a data control section 41, modulation coding section 43, Discrete Fourier Transform (DFT) section 44, mapping section 45, Inverse Fast Fourier Transform (IFFT) section 47, radio transmission section 51, radio reception section 53, Fast Fourier Transform (FFT) section 55, demodulation decoding section 57, data extracting section 61, and antenna 63. A feedback information control section 65 has a reception quality information generating section 67, reception quality measuring section 71, transmission signal precoding information generating section 68, and transmission signal number-of-sequence information generating section 69. The antenna 63 is provided with the number of antennas required for MIMO-SDM communications.

To the data control section 41 is input transmission data to transmit to the base station apparatus, control data, and feedback information output from the feedback information control section 65, and the data is sequentially transmitted to the base station apparatus.

The modulation coding section 43 provides modulation processing and error correcting coding processing to the signal input from the data control section 41, and outputs each data to the Discrete Fourier Transform section 44. The Discrete Fourier Transform section 44 performs Fourier transform processing on the signal input from the modulation coding section 43, generates a signal to perform SC-FDMA, and outputs the signal to the mapping section 45. The mapping section 45 maps the data input from the Discrete Fourier Transform section 44 on subcarriers allocated from the base station apparatus to output to the Inverse Fast Fourier Transform section 47.

The Inverse Fast Fourier Transform section 47 provides processing of inverse fast Fourier transform to a symbol sequence input from the mapping section 45 to transform into a time-series baseband digital signal, and outputs the signal to the radio transmission section 51. The output signal from the Inverse Fast Fourier Transform section 47 is subjected to digital/analog conversion in the radio transmission section 51, and upconverted into a signal with a frequency suitable for transmission, and then, the signal is transmitted to the base station apparatus via the antenna.

The reception quality measuring section 71 measures reception quality of a signal received from the base station apparatus. The reception quality information generating section 67 generates reception quality information to transmit to the base station apparatus, based on the information measured in the reception quality measuring section 71. The transmission signal precoding information generating section 68 calculates propagation path information using the signal received from the base station apparatus, and generates information of precoding that the base station apparatus performs on a transmission signal. The transmission signal number-of-sequence information generating section 69 calculates propagation path information using the signal received from the base station apparatus, and calculates the number of transmission sequences communicable with the base station apparatus.

The feedback information control section 65 manages the control signals generated in the reception quality information generating section 67, transmission signal precoding information generating section 68, and transmission signal number-of-sequence information generating section 69, and outputs the signals to the data control section 41. The feedback information managed by the feedback information control section 65 is not limited to generation and control of the signals described herein, and may include portions to manage other kinds of feedback information.

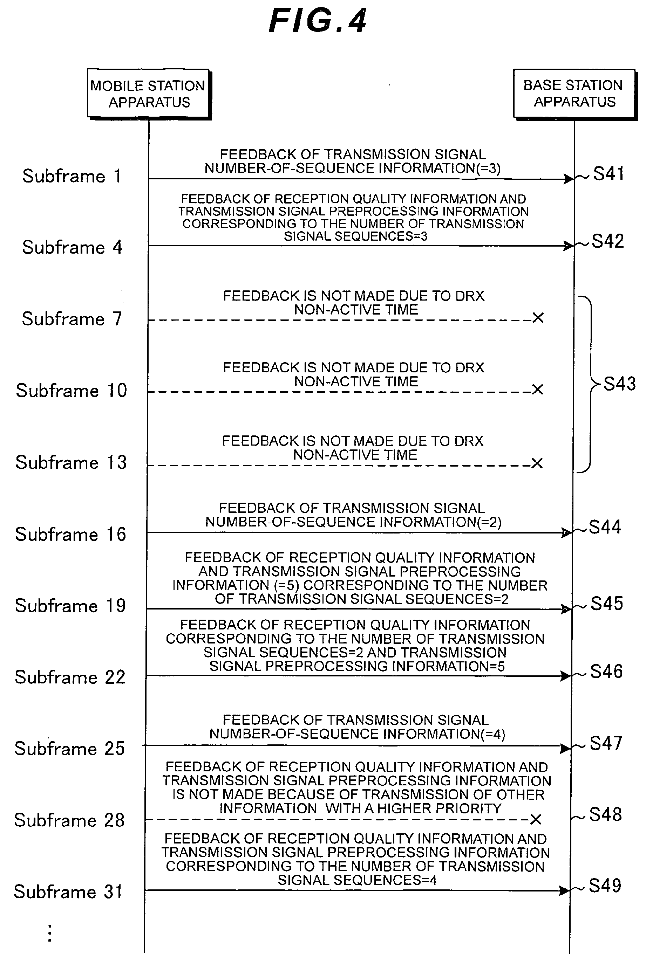

FIG. 3 is a diagram showing a timing chart to explain the processing flow between the base station apparatus and the mobile station apparatus in the mobile communication system according to Example 1, and FIG. 4 is a sequence chart between the base station apparatus and the mobile station apparatus in the mobile communication system according to Example 1. As shown in FIGs. 3 and 4, the reception quality information, transmission signal precoding information and transmission signal number-of-sequence information is transmitted only in subframes in which uplink control channel resource allocation is performed by the base station apparatus to the mobile station apparatus. Further, herein, it is possible to concurrently transmit the reception quality information and the transmission signal precoding information, but these two types of information and the transmission signal number-of-sequence information is not transmitted concurrently.

In addition, the transmission signal precoding information is dependent on the transmission signal number-of-sequence information, the reception quality information is dependent on both of the transmission signal precoding information and transmission signal number-of-sequence information, and therefore, with respect to the priority as information and the order, these pieces of information are handled as transmission signal number-of-sequence information > transmission signal precoding information ≥ reception quality information. Herein, the priority indicates that when transmission arises in a concurrent subframe, there is a possibility that information with a lower priority is not transmitted. Further, it is meant that when the priories are equal, there is a possibility that these pieces of information are transmitted in a concurrent subframe.

In FIGs. 3 and 4, as an example, resources are allocated every three subframes in uplink control channel resource allocation. Among resources, the transmission signal number-of-sequence information is transmitted once every four times in which uplink control channel resource allocation is performed. In uplink control channel resources subsequent to transmission of the transmission signal number-of-sequence information, transmitted is the reception quality information and transmission signal precoding information using the transmission signal number-of-sequence information. At the times (twice), at which uplink control channel resources are allocated, up to transmission of subsequent transmission signal number-of-sequence information, the reception quality information calculated using the previously transmitted transmission signal number-of-sequence information and transmission signal precoding information is periodically transmitted.

In addition, the type of channel used in transmission is not limited particularly, and a plurality of types of channels may be used. Further, herein, resources to transmit the transmission signal number-of-sequence information, transmission signal precoding information and reception quality information are collectively allocated, but the allocation method is not limited thereto, and resources may be allocated individually.

The operation of the mobile communication system according to this Example will be described using FIGs. 3 and 4. The base station apparatus is capable of allocating resources of the uplink control channel for the mobile station apparatus to transmit the reception quality information, transmission signal precoding information and transmission signal number-of-sequence information continuously in the long term, for example, using a radio resource control signal (RRC signaling, RRC: Radio Resource Control). "Continuously in the long term" means that a plurality of resources of temporally different timings is allocated in single signaling. In addition, the method of uplink control channel resource allocation is not limited to RRC signaling, and another method may be used.

First, in a subframe 1 where uplink control channel resources are first allocated, the mobile station apparatus transmits the transmission signal number-of-sequence information to the base station apparatus as feedback (step S41). Herein, the mobile station apparatus transmits the transmission signal number-of-sequence information in the subframe 1, and a subframe in which the mobile station apparatus starts to transmit the reception quality information, transmission signal precoding information and transmission signal number-of-sequence information can be set by an offset value or the like set by the base station apparatus.

In a subframe 4 where next uplink control channel resource allocation is made, the mobile station apparatus transmits to the base station apparatus the reception quality information and transmission signal precoding information corresponding to the transmission signal number-of-sequence information (=3) that is transmitted to the base station apparatus in the subframe 1 (step S42). Subframes 7 and 10 are subframes where uplink control channel resource allocation is made, but these periods belong to the Non-active Time of DRX, and therefore, feedback of the reception quality information and transmission signal precoding information is not made.

Next, a subframe 13 is the timing of transmitting the transmission signal number-of-sequence information as feedback, but is of the Non-active time of DRX, and the feedback is not made similarly (step S43). In a subframe 16 where next uplink control channel resource allocation is made after the Non-active Time of DRX is finished, the mobile station apparatus makes feedback of the transmission signal number-of-sequence information (=2) (step S44). Further, at this point, although the subframe 16 is originally the feedback timing of the reception quality information and transmission signal precoding information, since feedback of the transmission signal number-of-sequence information is preferentially made, feedback of the other information is not made (step S44).

Then, in a subframe 19 where next uplink control channel resource allocation is made, the reception quality information and transmission signal precoding information (=5) that is scheduled to transmit in the subframe 16 is transmitted to the base station apparatus as feedback (step S45). At this point, the reception quality information and transmission signal precoding information corresponds to the transmission signal number-of-sequence information (=2) transmitted in the subframe 16. In a subframe 22 is transmitted the reception quality information corresponding to the transmission signal number-of-sequence information (=2) transmitted in the subframe 16 and the transmission signal precoding information (=5) transmitted in the subframe 19. Herein, the reception quality information scheduled to transmit in the subframe 19 may be transmitted, or the reception quality information scheduled to transmit in the subframe 22 may be transmitted.

Next, in a subframe 25, the mobile station apparatus transmits the transmission signal number-of-sequence information (=4) to the base station apparatus as feedback (step S47). Then, in a subframe 28 where next uplink control channel resource allocation is made, although resources are allocated to transmit the reception quality information and transmission signal precoding information to the base station apparatus, since information with a priority higher than those of the information is transmitted, transmission of these pieces of the information is halted (step S48). The information with a higher priority includes scheduling request (SR), detailed reception quality information (that may include the transmission signal precoding information and transmission signal number-of-sequence information) transmission that is made only once using a PUSCH (Physical Uplink Shared Channel) designated by the base station apparatus, and the like. Further, the Non-active Time of DRX as described previously undergoes the same manner. In a subframe 31, although resources are allocated by assuming to transmit only the reception quality information, transmitted is the reception quality information and the transmission signal precoding information that is not transmitted in the subframe 28 (step S49).

Thus, according to the mobile communication system according to Embodiment 1 of the invention, even when feedback of the transmission signal precoding information cannot be made due to the reason that a subframe of transmission timing of the transmission signal number-of-sequence information is in the Non-active Time of DRX or the like, feedback of the transmission signal precoding information is made in a subframe where nextuplink controlchannelresource allocation is made after the period during which the information cannot be transmitted is finished. By this means, the base station apparatus is capable of knowing correct transmission signal precoding information after the period during which the information cannot be transmitted is finished, and is able to perform suitable downlink communications based on the subsequently transmitted reception quality information.

### (Example 2)

A mobile communication system according to Example 2 of the invention will be described below with reference to drawings. In the mobile communication system according to Example 2 of the invention, with respect to the reception quality information that is transmitted as feedback during a period between the timing at which the transmission signal precoding information feedback is not made due to the reason of Non-active Time of DRX or the like and the timing at which next transmission signal precoding information is transmitted as feedback, it is assumed tacitly that the transmission signal precoding information beforehand negotiated between the base station apparatus and the mobile station apparatus is used, and each of the mobile station apparatus and the base station apparatus performs the processing. In this respect, the mobile communication system according to Example 2 differs from the mobile communication system according to Example 1. In addition, the configurations of the base station apparatus and the mobile station apparatus are the same as those shown in FIGs. 1 and 2.

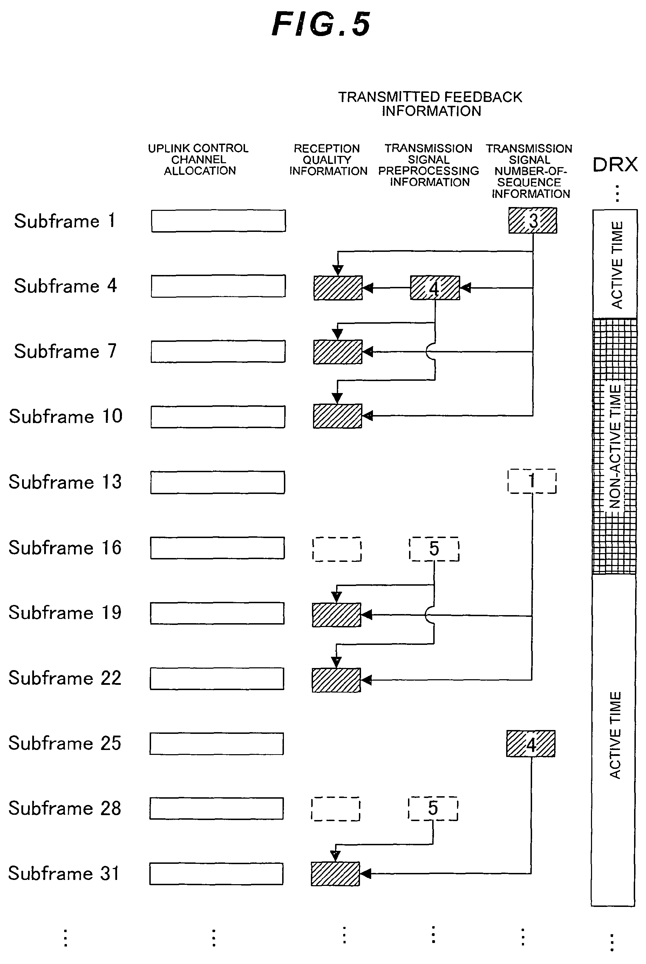

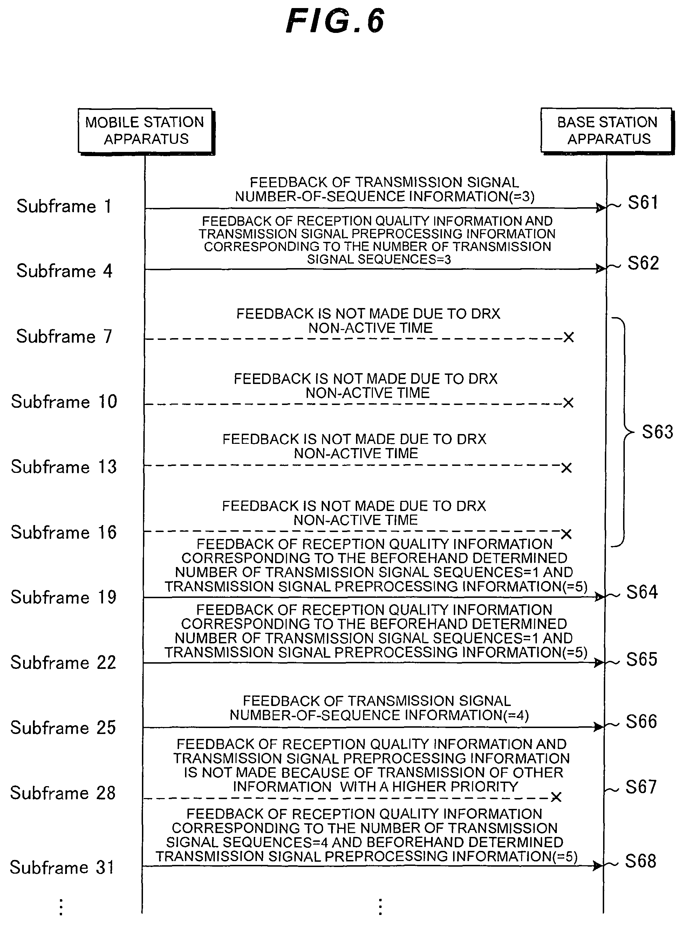

FIG. 5 is a diagram showing a timing chart to explain the processing flow between the base station apparatus and the mobile station apparatus in the mobile communication system according to Example 2, and FIG. 6 is a sequence chart between the base station apparatus and the mobile station apparatus in the mobile communication system according to Example 2. As shown in FIGs. 5 and 6, also in the mobile communication system according to this Embodiment, the operations in subframes 1 to 13 (step S61 to step S63) are the same operations in Embodiment 1, and descriptions thereof are omitted. In this Embodiment, the Non-active Time of DRX is continued up to the subframe 16, and the reception quality information and transmission signal precoding information that is scheduled to transmit with uplink control channel resources allocated in the subframes is not transmitted.

The mobile station apparatus performs the following operation for a period during which the Non-active Time of DRX finishes in a subframe 19 and feedback of next transmission signal number-of-sequence information (=4) is made in a subframe 25. In other words, in subframes 19 and 22 where uplink control channel resource allocation occurs, the mobile station apparatus transmits the reception quality information using beforehand defined transmission signal number-of-sequence information and transmission signal precoding information to the base station apparatus as feedback (steps S64 and S65). Herein, the beforehand defined transmission signal number-of-sequence information is, for example, the number of transmission signal sequences = 1 (minimum value) that minimizes the information amount of the information transmitted from the mobile station apparatus as feedback, the number of transmission signal sequences = 4 (maximum value) that enables the propagation path to be used most efficiently (enables maximum throughput to be obtained), or the like, and can be defined in advance between the base station apparatus and the mobile station apparatus by specifications or the like. Further, the beforehand defined transmission signal precoding information is obtained by determining, by specifications or the like, an index indicative of a table of sequences beforehand shared between the mobile station apparatus and the base station apparatus, or may be notified from the base station apparatus in communications between the base station apparatus and mobile station apparatus.

Then, with respect to the reception quality information and transmission signal precoding information that is transmitted as feedback for a period during which the Non-active Time of DRX finishes and feedback of next transmission signal number-of-sequence information is made from the mobile station apparatus, the base station apparatus performs the processing while assuming that the transmission signal number-of-sequence information corresponds to the beforehand determined value (for example, the number of transmission signal sequences =1 (minimum value) or the number of transmission signal sequences =4 (maximum value)), and that the transmission signal precoding information corresponds to the beforehand determined value (for example, No. 5).

After the mobile station apparatus transmits the transmission signal number-of-sequence information (=4) as feedback in a subframe 25 (step S66), in a subframe 28 where next uplink control channel resource allocation is made, although resources are allocated to transmit the reception quality information and transmission signal precoding information to the base station apparatus, since information with a priority higher than those of the information is transmitted, transmission of these pieces of the information is halted (step S67). The information with a higher priority includes scheduling request (SR), detailed reception quality information (that may include the transmission signal precoding information and transmission signal number-of-sequence information) transmission that is made only once using a PUSCH (Physical Uplink Shared Channel) designated by the base station apparatus, and the like. Further, the Non-active Time of DRX as described previously undergoes the same manner. In a subframe 31, resources are allocated by assuming to transmit only the reception quality information, and herein, the reception quality information is calculated on the assumption that the number of transmission signal sequences is the number of transmission signal sequences =4 transmitted in the subframe 25 and that the transmission signal precoding information corresponds to the beforehand determined value (for example, the index indicative of a sequence is No. 5), and is transmitted to the base station apparatus (step S68).

In addition, in FIGs. 5 and 6, with respect to a value of the beforehand determined transmission signal number-of-sequence information during a period between the timing at which the transmission signal precoding information cannot be transmitted due to finish of DRX Non-active time or the like and the timing at which next transmission signal precoding information is transmitted as feedback, the descriptions are given by setting the precoding information represented by index No. 5, as an example, but as described above, the value can be defined in advance by specifications, etc.

In addition, in this Embodiment, the beforehand determined transmission signal precoding information is given as a fixed value in a subframe, but may be given as a function with a value, such as a subcarrier number and SC-FDMA symbol sharable between the mobile station apparatus and base station apparatus, input thereto.

Thus, according to the mobile communication system according to Example 2 of the invention, even when feedback of the transmission signal precoding information cannot be made due to the reason that a subframe of transmission timing of the transmission signal precoding information is in the Non-active Time of DRX or the like, the reception quality information is transmitted as feedback with the transmission signal precoding information corresponding to a beforehand determined value for a period during which the DRX Non-active Time finishes and feedback of next transmission signal precoding information is made from the mobile station apparatus. By this means, it is possible to prevent the occurrence of burst error that occurs in using the transmission signal precoding information that is not adapted to conditions of the propagation path.

Further, in above-mentioned Example 2, descriptions are not given about information indicating that the reception quality information is calculated using the transmission signal precoding information that is transmitted at which time, but it is alsopossible to include the information indicating that "the beforehand determined transmission signal precoding sequence is used" or that "the transmitted latest transmission signal precoding sequence is used" in the reception quality information. When changes in the propagation path are smaller than the period of feedback, the possibility of obtaining better characteristics is higher in performing precoding using lately transmitted transmission signal precoding information than in using the beforehand determined transmission signal precoding sequence. By using both the information as circumstances demand, it is possible to further improve characteristics.

### (Example 3)

A mobile communication system according to Example 3 will be described below with reference to drawings. In the mobile communication system according to Example 3, the mobile station apparatus does not transmit the reception quality information and the transmission signal precoding information to the base station apparatus as feedback for a period during which the Non-active Time of DRX finishes and feedback of next transmission signal number-of-sequence information is made, and the base station apparatus transmits downlink data using the beforehand determined number of transmission signal sequences during the period. In this respect, Example 3 differs from Examples 1 and 2. In addition, the configurations of the base station apparatus and the mobile station apparatus are the same as those shown in FIGs. 1 and 2.

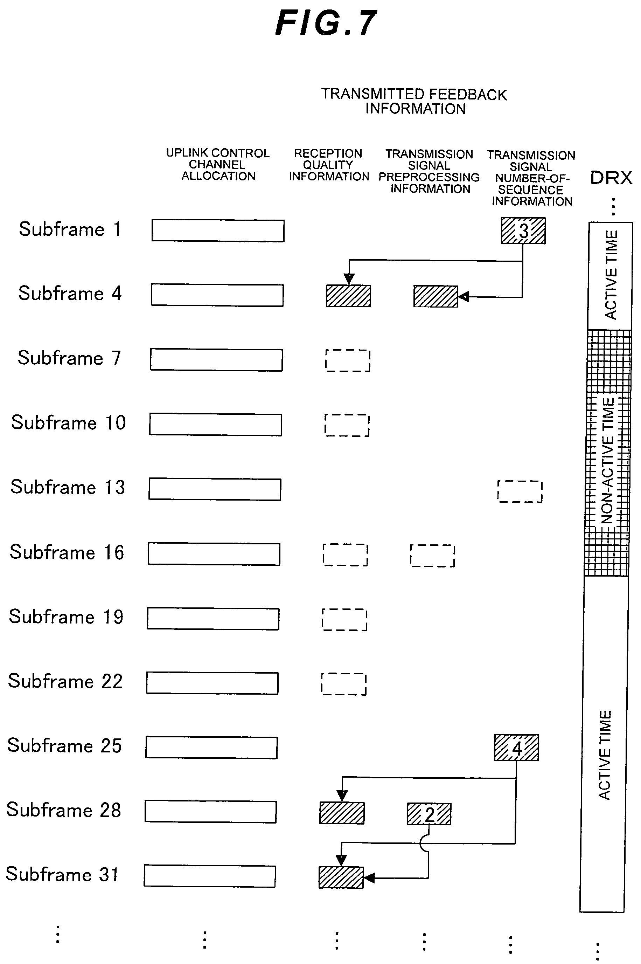

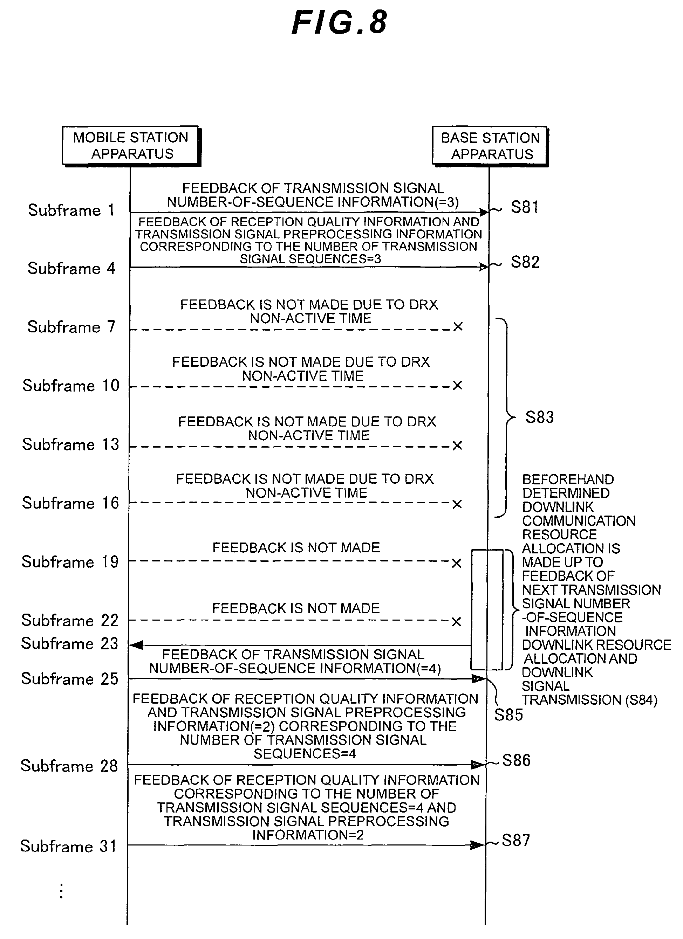

FIG. 7 is a diagram showing a timing chart to explain the processing flow between the base station apparatus and the mobile station apparatus in the mobile communication system according to Example 3, and FIG. 8 is a sequence chart between the base station apparatus and the mobile station apparatus in the mobile communication system according to Example 3. As shown in FIGs. 7 and 8, also in the mobile communication system according to this Example, the operations in subframes 1 to 16 (step S81 to step S83) are the same operations in Example 2, and descriptions thereof are omitted.

Next, the mobile station apparatus does not perform feedback of the reception quality information and the transmission signal precoding information, even in subframes (subframes 19 and 22) with uplink control channel resources allocated, for a period during which the Non-active Time of DRX finishes and feedback of next transmission signal precoding information is made in a subframe 28 (step S84) The base station apparatus transmits downlink data in a beforehand determined form for the period during which the Non-active Time of DRX finishes and feedback of next transmission signal precoding information is made.

More specifically, in a subframe 23, the base station apparatus transmits allocation of downlink signal to the mobile station apparatus on a control channel, and in resources designated thereon, a downlink signal is transmitted. Inthis subframe, the base station apparatus transmits a signal using the beforehand determined transmission signal precoding information. Herein, the beforehand determined form is using a transmission signal sequence beforehand determined between the base station apparatus and the mobile station apparatus, or transmission diversity (such as SFBC: Space Frequency Block Coding, STBC: Space Time Block Coding, FSTD: Frequency-Space Transmit Diversity and TSTD: Time-Space Transmit Diversity) that does not need the transmission signal precoding information transmitted from the mobile station apparatus as feedback. These forms can also be defined in advance between a transmission base station apparatus and mobile station apparatus by a specification or the like, and it is also possible to designate the form every time by the control information given together with the downlink signal. Further, the base station apparatus is capable of notifying the form (separately for each mobile station apparatus, or as broadcast information).

Then, after the mobile station apparatus transmits the transmission signal number-of-sequence information (=4) as feedback in a subframe 25 (step S85) and further, transmits the transmission signal preceding information (=2) as feedback in a subframe 28 (step S86), in a subframe 31, the mobile station apparatus transmits the reception quality information corresponding to the transmission signal number-of-sequence information (=4) and transmission signal precoding information (=2) transmitted as feedback (step S87). When the base station apparatus transmits downlink data in subframe 31 and subsequent subframes, the base station apparatus implements suitable downlink data transmission using the transmission signal number-of-sequence information, reception quality information and transmission signal precoding information.

Thus, according to the mobile communication system according to Example 3, when feedback of the transmission signal precoding information cannot be made due to the reason that a subframe of transmission timing of the transmission signal precoding information is in the Non-active Time of DRX or the like, for a period during which the period in which feedback cannot be made finishes and feedback of next transmission signal number-of-sequence information is made, the mobile station apparatus does not perform feedback of the reception quality information, and the base station apparatus transmits downlink data in a beforehand determined form. By this means, it is possible to reduce power consumption to transmit the feedback information that is not used.

### (Example 4)

A mobile communication system according to Example 4 will be described below with reference to drawings. In the mobile communication system according to Example 4, the reception quality information transmitted from the mobile station apparatus corresponds to a beforehand determined transmission mode for a period during which such a period finishes that the transmission signal precoding information cannot be transmitted due to the Non-active Time of DRX or the like and feedback of next transmission signal precoding information is made. In this respect, Example 4 differs from Examples 1, 2 and 3. The transmission mode indicates transmission diversity such as SFBC, STBC, FSTD and TSTD, Open Loop MIMO (OL-MIMO: Open Loop Multi-Input Multi-Output) that does not need feedback of the transmission signal precoding information where the transmission signal precoding sequence varies in a known pattern (or precoding of a transmission signal is not performed), and the like. In addition, the configurations of the base station apparatus and the mobile station apparatus are the same as those shown in FIGs. 1 and 2.

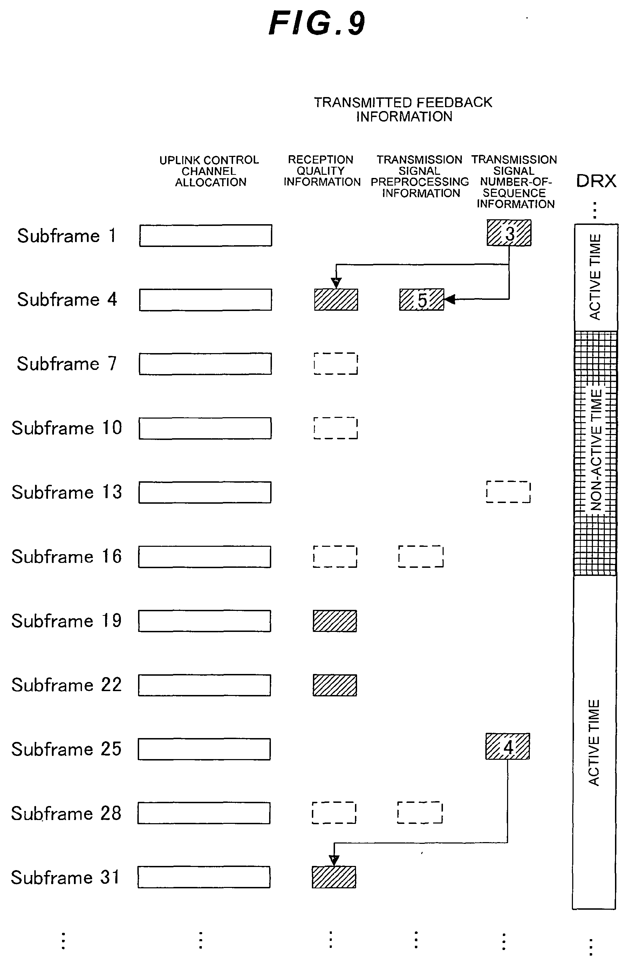

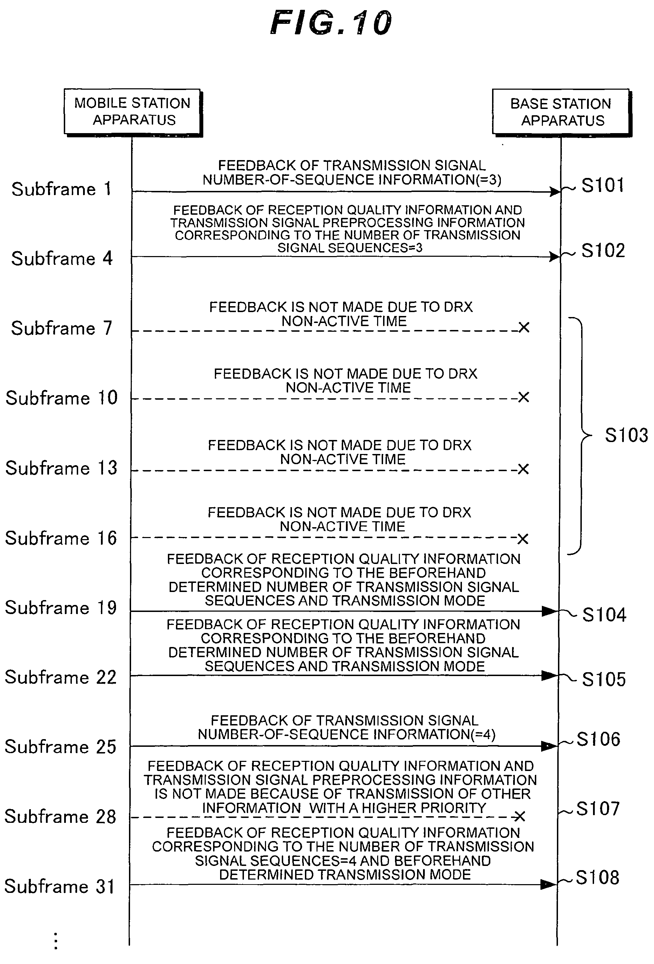

FIG. 9 is a diagram showing a timing chart to explain the processing flow between the base station apparatus and the mobile station apparatus in the mobile communication system according to Example 4, and FIG. 10 is a sequence chart between the base station apparatus and the mobile station apparatus in the mobile communication system according to Example 4. As shown in FIGs. 9 and 10, also in the mobile communication system according to this Example, the operations in subframes 1 to 16 (step S101 to step S103) are the same operations in Example 2, and descriptions thereof are omitted.

Next, the mobile station apparatus performs the following operation for a period during which the Non-active Time of DRX finishes and feedback of next transmission signal number-of-sequence information is made in a subframe 25. In other words, since the transmission signal number-of-sequence information and transmission signal precoding information scheduled to transmit in subframes 13 and 16 is not transmitted, the mobile station apparatus transmits the reception quality information (reception quality information corresponding to a communication mode notified from the base station apparatus) corresponding to a beforehand determined transmission mode in subframes (subframes 19 and 22) where uplink control channel resource allocation is made (steps S104 and S105). As described previously, as the beforehand determined transmission mode, it is possible to use the transmission diversity mode (SFBC, STBC, FSTD and TSTD) and OL-MIMO. As the number of transmission signal sequence at this point, the latest previously transmitted number (herein, the number of transmission signal sequences =3 transmitted in the subframe 1) may be used, or a value beforehand determined by specifications between the base station apparatus and the mobile station apparatus may be used. Further, in the case of using the transmission mode such as SFBC that does not perform spatial multiplexing, there is a case where using the number of transmission signal sequences =1 is the premise. In the case of using a transmission mode that does not need feedback of the transmission signal precoding information, the number of transmission signal sequences is not specified based on which the reception quality information is calculated.

Then, the mobile station apparatus transmits the transmission signal number-of-sequence information (=4) in a subframe 25 as feedback (step S106). Although transmission of the reception quality information and the transmission signal precoding information is scheduled in a subframe 28, since other information with a high priority is transmitted, feedback of the information is not made (step S107). For a subframe 31, the transmission signal number-of-sequence information (=4) to calculate the reception quality information is obtained by feedback in the subframe 25, but the transmission signal precoding information corresponding to such information is not transmitted in the subframe 28. Therefore, as in the operation in the subframes 19 and 22 (steps S104 and S105), the reception quality information corresponding to the beforehand determined transmission mode is transmitted. At this point, since the transmission signal number-of-sequence information is transmitted by feedback in the subframe 25, OL-MIMO may be performed according to the information (transmission signal number-of-sequence information =4).

Thus, according to the mobile communication system according to Example 4 of the invention, even when feedback of the transmission signal precoding information cannot be made due to the reason that a subframe of transmission timing of the transmission signal precoding information is in the Non-active Time of DRX or the like, for a period during which the period in which feedback cannot be made finishes and feedback of next transmission signal number-of-sequence information is made, the base station apparatus transmits the reception quality information corresponding to a beforehand determined transmission mode, and it is thereby possible to prevent the communication quality from deteriorating due to communications using the transmission signal precoding information that is not adapted to conditions of the propagation path.

### (Example 5)

A mobile communication system according to Example 5 will be described below with reference to drawings. In the mobile communication system according to Example 5, when the cause of the fact that scheduled transmission signal precoding information cannot be transmitted is transmission of transmission signal precoding information by another means, subsequently transmitted reception quality information follows the transmission signal precoding information transmitted by the another means. In this respect, Example 5 differs from Examples 1, 2, 3 and 4. In addition, the configurations of the base station apparatus and the mobile station apparatus are the same as those shown in FIGs. 1 and 2.

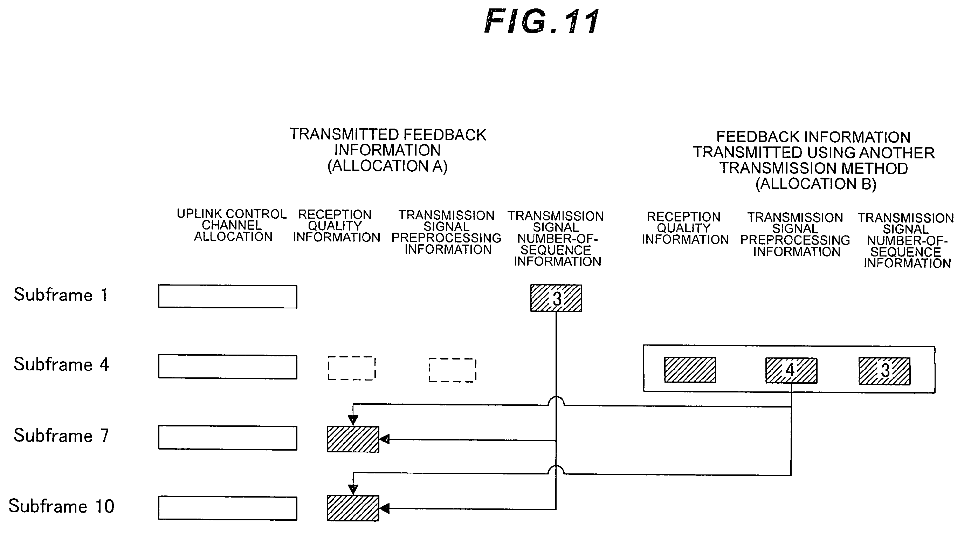

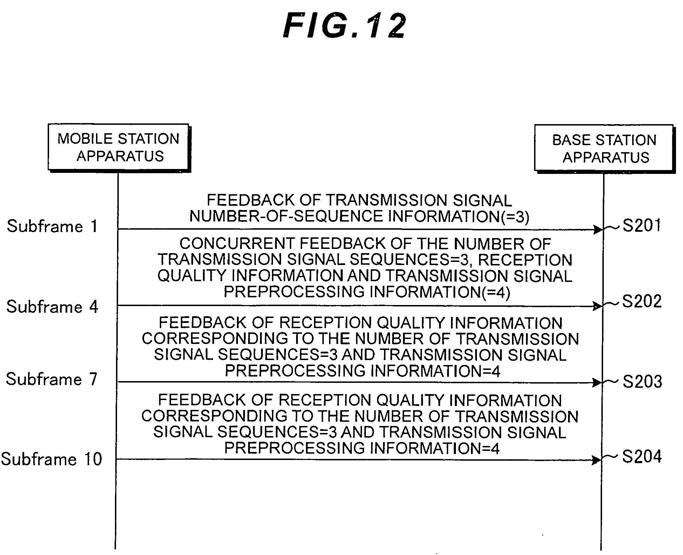

FIG. 11 is a diagram showing a timing chart to explain the processing flow between the base station apparatus and the mobile station apparatus in the mobile communication system according to Example 5, and FIG. 12 is a sequence chart between the base station apparatus and the mobile station apparatus in the mobile communication system according to Example 5. FIGs. 11 and 12 show the operations in subframes 1 to 10, where communication resources are allocated every three subframes starting a subframe 1 to transmit the transmission signal number-of-sequence information (subframe 1), transmission signal precoding information and reception quality information (subframe 4), reception quality information (subframe 7) and reception quality information (subframe 7). Herein, the communication resources allocated by this procedure and feedback according to the procedure are called allocation A.

In the subframe 1, the mobile station apparatus transmits the transmission signal number-of-sequence information (=3) to the base station apparatus according to the allocation A (step S201). Next, in the subframe 4, although the reception quality information and transmission signal precoding information is scheduled to transmit according to the allocation A, herein, an interrupt request is made to concurrently transmit the reception quality information, transmission signal precoding information and transmission signal number-of-sequence information using another means (allocation B) . The mobile station apparatus abandons the beforehand allocated communication resources, and according to the allocation B, concurrently transmits the reception quality information, transmission signal precoding information and transmission signal number-of-sequence information (step S202). More specifically, the allocation A corresponds to allocation such that the physical uplink control channel (PUCCH) with the number of bits limited is periodically allocated, for example, in subframes 1, 4 and 7, and the allocation B corresponds to performing concurrent transmission of the reception quality information, transmission signal precoding information and transmission signal number-of-sequence information using once a physical uplink shared channel (PUSCH) because the base station apparatus requests the channel information with an information amount larger that can be transmitted on the PUCCH.

In the subframe 7, the mobile station apparatus transmits the reception quality information using the communication resources allocated according to the allocation A (step S203). Herein, the transmission signal precoding information based on which the reception quality information is calculated is not transmitted in the allocation A, but the transmission signal precoding information according to the allocation B is transmitted in the subframe 4. Therefore, in the subframe 7, the mobile station apparatus calculates the reception quality information using the transmission signal precoding information transmitted in the subframe 4 to transmit to the base station apparatus. In addition, as the transmission signal number-of-sequence information used in calculating the reception quality information, it may be possible to use the information transmitted in the subframe 1 or the information transmitted in the subframe 4. The operation in the subframe 10 is the same as the case of the subframe 7 (step S204).

Thus, according to the mobile communication system according to Example 5, even in the case where feedback of the transmission signal precoding information cannot be made, when the transmission signal precoding information is transmitted as feedback using another means at the timing, the mobile station apparatus transmits the reception quality information using the transmission signal precoding information transmitted as feedback for a period up to execution of next feedback of the transmission number-of-sequence information. By this means, it is possible to prevent the communication quality from deteriorating due to communications using the transmission signal precoding information that is not adapted to conditions of the propagation path.

In addition, in above-mentioned Embodiments 1 to 5, scheduling is made to transmit the reception quality information and the transmission signal precoding information at the same timing. Also in the case that such information is scheduled in different subframes, when the transmission signal precoding information is transmitted prior to the reception quality information, and the reception quality information follows the transmission signal precoding information, it is possible to perform the same processing.

In addition, in above-mentioned Embodiments 1 to 5, the descriptions are given with attention directed toward the relationship between the reception quality information and the transmission signal precoding information, but combinations of the information to which the invention is applicable are not limited to the reception quality information and the transmission signal precoding information. For example, when there is a plurality of kinds of reception quality information (associated with the system bandwidth and with a specific band) and a correspondence relationship in the order to transmit such information is set, it is possible to perform the same processing as in Examples 1 to 5.

In addition, in above-mentioned Examples 1 to 5, descriptions are given on allocated second and subsequent transmission resources of the transmission signal precoding information, but are not limited in a location of resources. More specifically, it is possible to perform the same processing on allocated first transmission resources of the transmission signal precoding information.

In addition, in above-mentioned Examples 1 to 5, when the transmission signal precoding information cannot be transmitted in allocated first transmission resources of the transmission signal precoding information, the same processing is always performed, but it is also possible to switch between these kinds of processing according to conditions. More specifically, only when the transmission signal precoding information cannot be transmitted in allocated first transmission resources of the first transmission signal precoding information, one of processing is applied among the types of processing shown in above-mentioned Examples 1 to 5, and when the transmission signal precoding information cannot be transmitted in the other transmission resources, it is possible to assume that the transmission signal precoding information lately transmitted to the base station apparatus from the mobile station apparatus is transmitted.

When the mobile station apparatus does not transmit the transmission signal precoding information with communication resources allocated from the base station apparatus to transmit the transmission signal precoding information, the mobile station apparatus calculates the reception quality information transmitted for a period during which the mobile station apparatus does not transmit the transmission signal precoding information and next transmits the transmission signal precoding information, using beforehand defined transmission signal precoding information, and therefore, is capable of transmitting the reception quality information based on the beforehand defined transmission signal precoding to the base station apparatus as feedback. By this means, it is possible to prevent the occurrence of burst error that occurs in the case of transmitting a downlink signal using the transmission signal precoding information and reception quality information that does correspond with each other in the mobile station apparatus.

When the beforehand defined transmission signal precoding information is set by a signal transmitted from the base station apparatus, the base station apparatus is capable of designating the transmission signal precoding information for the mobile station apparatus under the initiative of the base station apparatus, and it is possible to obtain the effect of suppressing interference.

When the feedback information includes the information indicating whether the reception quality information is calculated based on the transmission signal precoding information that is beforehand defined between the mobile station apparatus and the base station apparatus or based on the latest transmission signal precoding information received from the base station apparatus, and it is thereby possible to calculate the reception quality information using the most suitable transmission signal precoding information in response to a change in the propagation path. In other words, when changes in the propagation path are smaller than the period of feedback, the possibility of obtaining better characteristics is higher in using the latest transmission signal precoding information transmitted from the base station apparatus than in using the before hand determined transmission signal precoding information. Therefore, by using both the information as circumstances demand, it is possible to improve communication characteristics.

When the mobile station apparatus does not transmit the transmission signal precoding information with communication resources allocated from the base station apparatus to transmit the transmission signal precoding information, the mobile station apparatus transmits to the base station apparatus the transmission signal precoding information that is not transmitted, using communication resources allocated in a period during which the mobile station apparatus does not transmit the transmission signal precoding information and next transmits the transmission signal precoding information. Therefore, even when a period arises that the transmission signal precoding information cannot be transmitted, the mobile station apparatus is capable of transmitting the transmission signal precoding information to the base station apparatus after the period finishes. By this means, the base station apparatus is capable of obtaining correct transmission signal precoding information, and is able to perform suitable downlink communications based on the subsequently received reception quality information.

When the mobile station apparatus does not transmit the transmission signal precoding information with communication resources allocated from the base station apparatus to transmit the transmission signal precoding information, the mobile station apparatus halts transmission of the reception quality information for a period during which the mobile station apparatus does not transmit the transmission signal precoding information and next transmits the transmission signal precoding information, and is able to reduce a power consumption amount to transmit the feedback information that is not used.

When the mobile station apparatus does not transmit the transmission signal precoding information with communication resources allocated from the base station apparatus to transmit the transmission signal precoding information, the mobile station apparatus transmits the reception quality information corresponding to a beforehand defined transmission mode to the base station apparatus for a period during which the mobile station apparatus does not transmit the transmission signal precoding information and next transmits the transmission signal precoding information, the base station apparatus is capable of performing scheduling using the reception quality information, and it is thereby possible to prevent the occurrence of deterioration of the communication quality that occurs in using the transmission signal precoding information that is not adapted to conditions of propagation path.

When the mobile station apparatus transmits the reception quality information corresponding to the communication mode notified from the base station apparatus to the base station apparatus, the base station apparatus is capable of designating the communication mode for the mobile station apparatus under the initiative of the base station apparatus, and is able to implement optimal communications corresponding to conditions of the base station apparatus.

When the mobile station apparatus does not transmit the transmission signal precoding information and transmits the reception quality information to the base station apparatus, the need of feedback of the transmission signal precoding information is eliminated, and it is possible to effectively use communication resources.

When the mobile station apparatus does not transmit the transmission signal precoding information with first communication resources allocated from the base station apparatus to transmit the transmission signal precoding information and transmits the transmission signal precoding information with second communication resources different from the first communication resources at the same transmission timing, the mobile station apparatus calculates the reception quality information, which is transmitted for a period during which the mobile station apparatus does not transmit the transmission signal precoding information with the first communication resources and next transmits the transmission signal precoding information with the first communication resources, using the transmission signal precoding information transmitted with the second communication resources, and is thereby capable of transmitting to the base station apparatus feedback of the reception quality information based on the transmission signal precoding information transmitted with the second communication resources. It is thereby possible to prevent the occurrence of deterioration of the communication quality that occurs in using the transmission signal precoding information that is not adapted to conditions of propagation path.

Further, a communication system of the invention is a communication system in which a base station apparatus and a mobile station apparatus perform wireless communications, and is characterized of being comprised of the mobile station apparatus as described above, and a base station apparatus configured to allocate communication resources to the mobile station apparatus based on reception quality information received from the mobile station apparatus.

According to this configuration, when the mobile station apparatus does not transmit the transmission signal precoding information with communication resources allocated from the base station apparatus to transmit the transmission signal precoding information, for example, the mobile station apparatus is capable of transmitting to the base station apparatus the transmission signal precoding information that is not transmitted, using communication resources allocated in a period during which the mobile station apparatus does not transmit the transmission signal precoding information and next transmits the transmission signal precoding information. By this means, even when a period arises that the transmission signal precoding information cannot be transmitted, the mobile station apparatus is capable of transmitting the transmission signal precoding information to the base station apparatus after the period finishes. By this means, the base station apparatus is capable of obtaining correct transmission signal precoding information, and is able to perform suitable downlink communications based on the subsequently received reception quality information.

When the mobile station apparatus does not transmit the transmission signal precoding information with communication resources allocated from the base station apparatus to transmit the transmission signal precoding information, the mobile station apparatus calculates the reception quality information transmitted for a period during which the mobile station apparatus does not transmit the transmission signal precoding information and next transmits the transmission signal precoding information, using beforehand defined transmission signal precoding information, and therefore, is capable of transmitting the reception quality information based on the beforehand defined transmission signal precoding to the base station apparatus as feedback. By this means, it is possible to prevent the occurrence of burst error that occurs in the case of transmitting a downlink signal using the transmission signal precoding information and reception quality information that does correspond with each other in the mobile station apparatus.

When the mobile station apparatus does not transmit the transmission signal precoding information with communication resources allocated from the base station apparatus to transmit the transmission signal precoding information, the mobile station apparatus transmits to the base station apparatus the transmission signal precoding information that is not transmitted, using communication resources allocated in a period during which the mobile station apparatus does not transmit the transmission signal precoding information and next transmits the transmission signal precoding information. Therefore, even when a period arises that the transmission signal precoding information cannot be transmitted, the mobile station apparatus is capable of transmitting the transmission signal precoding information to the base station apparatus after the period finishes. By this means, the base station apparatus is capable of obtaining correct transmission signal precoding information, and is able to perform suitable downlink communications based on the subsequently received reception quality information.

In the forgoing, the Examples are described specifically with reference to the drawings, but specific configurations are not limited to the above-mentioned Examples and designs and others in the scope without departing from the subject matter of the invention are included in the scope of claims.

## Claims

1. A mobile station apparatus configured to periodically transmit feedback information including transmission signal number-of-sequence information, transmission signal precoding information, and reception quality information calculated based on the transmission signal number-of-sequence information and the transmission signal precoding information to a base station apparatus using an uplink control channel, the mobile station apparatus being **characterized by**:
a processing section that is configured to calculate the reception quality information based on beforehand defined transmission signal number-of-sequence information and beforehand defined transmission signal precoding information when the transmission signal precoding information is not transmitted.

2. The mobile station apparatus according to claim 1,
wherein the beforehand defined transmission signal precoding information is set by a signal transmitted from the base station apparatus.

3. The mobile station apparatus according to claim 1,
wherein the mobile station apparatus is configured to transmit, as feedback, information indicating whether or not the reception quality information as feedback is generated based on the beforehand defined transmission signal number-of-sequence information and the beforehand defined transmission signal precoding information.

4. A communication system in which a base station apparatus and a mobile station apparatus perform wireless communications, comprising:
the mobile station apparatus according to claims 1, 2 or 3 and
a base station apparatus configured to allocate communication resources to the mobile station apparatus based on reception quality information received from the mobile station apparatus.

5. A communication method in which a mobile station apparatus periodically transmits feedback information including transmission signal number-of-sequence information, transmission signal precoding information, and reception quality information calculated based on the transmission signal number-of-sequence information and the transmission signal precoding information to a base station apparatus using an uplink control channel,
**characterized in that** when the transmission signal precoding information is not transmitted, the reception quality information is calculated based on beforehand defined transmission signal precoding information.

6. The communication method according to claim 5, wherein when the transmission signal number-of-sequence information and the transmission signal precoding information is not transmitted on an uplink control channel allocated for the transmission signal number-of-sequence information, the reception quality information is generated based on beforehand defined transmission signal number-of-sequence information and beforehand defined transmission signal precoding information.

## Patentansprüche

1. Mobilstationsvorrichtung, dafür eingerichtet, eine Rückmeldungsinformation, die eine Information einer Anzahl von Sequenzen eines Übertragungssignals, eine Übertragungssignal-Vorcodierungsinformation und eine Empfangsqualitätsinformation, berechnet auf der Basis der Information einer Anzahl von Sequenzen eines Übertragungssignals und der Übertragungssignal-Vorcodierungsinformation, enthält, unter Verwendung eines Uplink-Steuerkanals periodisch an eine Basisstationsvorrichtung zu senden, wobei die Mobilstationsvorrichtung **gekennzeichnet ist durch**:
eine Verarbeitungssektion, die dafür eingerichtet ist, die Empfangsqualitätsinformation basierend auf einer zuvor definierten Information einer Anzahl von Sequenzen eines Übertragungssignals und einer zuvor definierten Übertragungssignal-Vorcodierungsinformation zu berechnen, wenn die Übertragungssignal-Vorcodierungsinformation nicht gesendet wird.

2. Mobilstationsvorrichtung nach Anspruch 1,
wobei die zuvor definierte Übertragungssignal-Vorcodierungsinformation durch ein von der Basisstationsvorrichtung gesendetes Signal gesetzt wird.

3. Mobilstationsvorrichtung nach Anspruch 1,
wobei die Mobilstationsvorrichtung dafür eingerichtet ist, als Rückmeldung eine Information zu senden, die angibt, ob die Empfangsqualitätsinformation als Rückmeldung erzeugt wird oder nicht, basierend auf der zuvor definierten Information einer Anzahl von Sequenzen eines Übertragungssignals und der zuvor definierten Übertragungssignal-Vorcodierungsinformation.

4. Kommunikationssystem, in welchem eine Basisstationsvorrichtung und eine Mobilstationsvorrichtung eine Drahtloskommunikation durchführen, aufweisend:
die Mobilstationsvorrichtung nach Ansprüchen 1, 2 oder 3 und
eine Basisstationsvorrichtung, die dafür eingerichtet ist, der Mobilstationsvorrichtung basierend auf einer von der Mobilstationsvorrichtung empfangenen Empfangsqualitätsinformation Kommunikationsressourcen zuzuweisen.

5. Kommunikationsverfahren, in welchem eine Mobilstationsvorrichtung eine Rückmeldungsinformation, die eine Information einer Anzahl von Sequenzen eines Übertragungssignals, eine Übertragungssignal-Vorcodierungsinformation und eine Empfangsqualitätsinformation, berechnet auf der Basis der Information einer Anzahl von Sequenzen eines Übertragungssignals und der Übertragungssignal-Vorcodierungsinformation, enthält, unter Verwendung eines Uplink-Steuerkanals periodisch an eine Basisstationsvorrichtung sendet,
**dadurch gekennzeichnet, dass**
wenn die Übertragungssignal-Vorcodierungsinformation nicht übertragen wird, die Empfangsqualitätsinformation basierend auf einer zuvor definierten Übertragungssignal-Vorcodierungsinformation berechnet wird.

6. Kommunikationsverfahren nach Anspruch 5, wobei, wenn die Information einer Anzahl von Sequenzen eines Übertragungssignals und die Übertragungssignal-Vorcodierungsinformation nicht auf einem Uplink-Steuerkanal gesendet werden, der für die Information einer Anzahl von Sequenzen eines Übertragungssignals zugewiesen wurde, die Empfangsqualitätsinformation basierend auf einer zuvor definierten Information einer Anzahl von Sequenzen eines Übertragungssignals und einer zuvor definierten Übertragungssignal-Vorcodierungsinformation erzeugt wird.

## Revendications

1. Appareil de station mobile configuré pour transmettre périodiquement des informations de retour, incluant des informations de nombre de séquences de signal de transmission, des informations de précodage de signal de transmission et des informations de qualité de réception calculées sur la base des informations de nombre de séquences de signal de transmission et des informations de précodage de signal de transmission, à un appareil de station de base utilisant un canal de contrôle de liaison montante, **caractérisé par** :
une section de traitement qui est configurée pour calculer les informations de qualité de réception sur la base des informations de nombre de séquences de signal de transmission définies au préalable et des informations de précodage de signal de transmission définies au préalable quand les informations de précodage de signal de transmission ne sont pas transmises.

2. Appareil de station mobile selon la revendication 1, dans lequel les informations de précodage de signal de transmission définies au préalable sont déterminées par un signal transmis depuis l'appareil de station de base.

3. Appareil de station mobile selon la revendication 1, dans lequel l'appareil de station mobile est configuré pour transmettre, en tant que retour, des informations indiquant si les informations de qualité de réception, en tant que retour, sont générées ou non sur la base des informations de nombre de séquences de signal de transmission définies au préalable et des informations de précodage de signal de transmission définies au préalable.

4. Système de communication, dans lequel un appareil de station de base et un appareil de station mobile exécutent des communications sans fil, comprenant :
l'appareil de station mobile selon les revendications 1, 2 ou 3 et
un appareil de station de base configuré pour allouer des ressources de communication à l'appareil de station mobile sur la base des informations de qualité de réception reçues depuis l'appareil de station mobile.

5. Procédé de communication, dans lequel un appareil de station mobile transmet périodiquement des informations de retour incluant des informations de nombre de séquences de signal de transmission, des informations de précodage de signal de transmission et des informations de qualité de réception calculées sur la base des informations de nombre de séquences de signal de transmission et des informations de précodage de signal de transmission, à un appareil de station de base utilisant un canal de contrôle de liaison montante,
**caractérisé en ce que**
lorsque les informations de précodage de signal de transmission ne sont pas transmises, les informations de qualité de réception sont calculées sur la base des informations de précodage de signal de transmission définies au préalable.

6. Procédé de communication selon la revendication 5, dans lequel lorsque les informations de nombre de séquences de signal de transmission et les informations de précodage de signal de transmission ne sont pas transmises sur un canal de contrôle de liaison montante alloué pour les informations de nombre de séquences de signal de transmission, les informations de qualité de réception sont générées sur la base des informations de nombre de séquences de signal de transmission définies au préalable des informations de précodage de signal de transmission définies au préalable.
